# EUROPÄISCHE PATENTSCHRIFT

(11) **EP 1 520 808 B1**
(45) Veröffentlichungstag und Bekanntmachung des Hinweises auf die Patenterteilung: **24.05.2006**
(21) Anmeldenummer: 04023283.7
(22) Anmeldetag: 30.09.2004
(51) Int. Cl.: B65G 7/10, B61D 3/16, B65F 9/00

(54) **Abrollvorrichtung zum Rollen eines Transportzylinders**
Device for rolling a cylindrical container
Dispositif pour déplacer en roulant un conteneur cylindrique

(30) Priorität: 02.10.2003 DE 10346488
(43) Veröffentlichungstag der Anmeldung: 06.04.2005
(73) Patentinhaber: Altvater, Jakob, 88410 Bad Wurzach (DE)
(72) Erfinder: Altvater, Jakob, 88410 Bad Wurzach (DE)
(74) Vertreter: Eisele, Otten, Roth & Dobler

(56) Entgegenhaltungen:
- DE-A1- 2 326 719
- DE-A1- 2 326 720
- DE-A1- 2 807 310
- DE-A1- 2 814 864
- DE-C- 516 062

## Beschreibung

Die Erfindung betrifft eine Abrollvorrichtung zum Rollen eines Transportzylinders nach dem Oberbegriff des Anspruchs 1.

Aus den deutschen Druckschriften DE OS 21 07 094 und DE 23 26 720 C3 ist eine Abrollvorrichtung zum Abrollen eines Transportzylinders von einem Fahrzeug auf einen Lagerplatz bzw. von einem Lagerplatz auf ein Fahrzeug bekannt. Diese Abrollvorrichtung umfasst eine Brücke mit einer horizontal verfahrbaren Laufkatze, an welcher eine Antriebseinheit angeordnet ist, welche vertikal verfahrbar ist und in einer unteren Stellung auf den Transportzylinder einwirkt.

Der Erfindung liegt die Aufgabe zu Grunde, eine Abrollvorrichtung für Transportzylinder zu entwickeln, mit welcher ein besonders zeitsparender Umschlag von Transportzylindern zwischen einem Fahrzeug und einem Lager möglich ist.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Die erfindungsgemäße Einrichtung sieht eine Abrollvorrichtung mit wenigstens zwei Antriebseinheiten je Brücke vor, von welchen jede auf einen von zwei benachbarten Transportzylindern einwirkt, um diese mit gleichbleibendem Abstand um deren Längsachsen zu rollen. Mit dieser Abrollvorrichtung, die an eine Brücke eine Umladeeinheit aufweist, welche zeitgleich auf zwei nebeneinander liegende Transportzylinder einwirkt, ist es möglich den Be- und Entladevorgang eines Fahrzeugs insbesondere eines Güterwaggons in sehr kurzer Zeit vorzunehmen. Der Entladevorgang und der Beladevorgang werden zeitgleich begonnen und zeitgleich abgeschlossen. Das Fahrzeug ist also in dem Moment, in welchem es ordnungsgemäß entladen ist auch schon wieder beladen. Hierbei ist es ohne Einfluss auf den Vorgang, ob ein voller Transportzylinder gegen einen leeren Transportzylinder oder eine leerer Transportzylinder gegen einen vollen Transportzylinder oder zwei leere Transportzylinder oder zwei volle Transportzylinder gegeneinander ausgetauscht werden.

Die Erfindung sieht weiterhin vor, die Abrollvorrichtung pro Brücke mit wenigstens zwei Laufkatzen auszustatten, welche jeweils eine Antriebseinheit tragen. Dies ermöglicht die Verwendung von baugleichen Komponenten an der Abrollvorrichtung.

Gemäß einer Ausführungsvariante sieht die Erfindung vor, je Brücke an wenigstens einer Laufkatze zwei Antriebseinheiten anzuordnen. Hierdurch ist es möglich die Steuerung bzw. Regelung der Abrollvorrichtung einfach zu gestalten, da bei dieser Ausführung eine Umladeeinheit nur eine Laufkatze aufweist.

Gemäß einer weiteren Ausführungsvariante sieht die Erfindung vor, je Brücke an wenigstens zwei Laufkatzen je eine Antriebseinheit anzuordnen. Gemäß einer dritten Ausführungsvariante sieht die Erfindung vor, je Brücke an wenigstens vier Laufkatzen je eine Teilantriebseinheit anzuordnen. Diese Anordnungen erlauben sowohl einen synchronen als auch einen asynchronen Betrieb der Laufkatzen. Somit ist bei einem Defekt einer Laufkatze noch ein Notbetrieb möglich.

Weiterhin sieht die Erfindung vor, die Laufkatzen mechanisch verbindbar zu gestalten, um aus jeweils zwei Antriebseinheiten bzw. vier Teilantriebseinheiten eine Umladeeinheit bilden zu können. Hierdurch ist ohne aufwändige Steuerung oder Regelung ein paralleles bzw. zeitgleiches Verfahren der jeweils für das Rollen eines Antriebzylinders erforderlichen Antriebseinheiten möglich.

Es ist vorteilhaft, die horizontale Verfahrbewegung der beiden Laufkatzen regelungstechnisch oder steuerungstechnisch zu synchronisieren. Hierdurch ist es möglich, die beiden Einheiten nach Bedarf parallel zueinander oder im Sonderfall gegenläufig zueinander zu betreiben.

Weiterhin sieht die Erfindung vor, die Abrollvorrichtung aus wenigstens zwei parallel zueinander angeordneten Brücken zu bilden. Ein solcher einem Brückenkran mit zwei Brücken ähnlicher Aufbau der Abrollvorrichtung erlaubt es, auf den Transportzylinder an zwei in Längsrichtung des Transportzylinders voneinander beabstandeten Stellen einzuwirken und einem ungewünschten Gieren des Transportbehälters wirksam entgegen zu wirken.

Eine weitere vorteilhafte Ausführung des Erfindungsgegenstandes sieht vor, die Abrollvorrichtung in Längsrichtung des Transportzylinders verfahrbar zu gestalten. Eine derartige Ausführung der Abrollvorrichtung ermöglicht es, die Abrollvorrichtung beispielsweise über einem parkenden Güterzug zu verfahren und diesen zu Be- und Entladen, ohne dass dieser während des Be- und Entladens rangiert werden muss.

Die Erfindung sieht auch vor, die Abrollvorrichtung über wenigstens einem Fahrweg insbesondere einem Gleiskörper und jeweils wenigstens einem links und rechts neben dem Fahrweg angeordneten Lagerplatz zu errichten. Hierdurch ist das gekoppelte Be- und Entladen möglich.

Weiterhin sieht die Erfindung vor, die Antriebseinrichtung mit wenigstens zwei Rollen auf den Transportzylinder einwirken zu lassen. Dies ermöglicht in beide Rollrichtungen immer ein schiebendes und ein bremsendes Einwirken der Abrollvorrichtung auf die Transportzylinder.

Schließlich sieht die Erfindung vor, wenigstens eine der Rollen mit einem Drehantrieb auszustatten, welcher auf den Transportzylinder über Reibschluss und/oder Formschluss einwirkt. Hierdurch ist über eine weitere Kraftübertragung auf den Transportzylinder möglich, um diesen in Bewegung zu setzen, in Bewegung zu halten oder zu bremsen. Für einen Formschluss zwischen der Antriebsrolle und dem Transportzylinder ist es insbesondere vorgesehen, um den Transportzylinder wenigstens einen Triebstock zu legen, welcher diesen ringförmig auf seiner Mantelfläche umläuft.

Ergänzend sieht die Erfindung einen Güterwaggon vor, welcher auf einem Fahrgestell unterhalb einer Lagerfläche für einen Transportzylinder ein Gestänge zum seitlichen Ausschwenken von Trägern aufweist, welche zwischen dem Waggon und dem Lagerplatz eine waagrechte Lauffläche für einen rollenden Transportzylinder bilden. Ein derartig ausgestatteter Waggon erlaubt es, rasch eine durchgehende gemeinsame Ebene mit den Lagerplätzen herzustellen. Hierbei ist es insbesondere auch vorgesehen, den Waggon mittels der Träger relativ zu den Lagerplätzen bzw. zur Abrollvorrichtung zu zentrieren. Hierzu greifen die Träger beim Ausschenken in an den Lagerplätzen angeordnete Rücksprünge ein. Alternativ sieht die Erfindung eine umgekehrte Anordnung vor, bei welcher Träger von den Lagerplätzen gegen den Waggon verschwenkbar sind.

Weitere Einzelheiten der Erfindung werden in der Zeichnung anhand von schematisch dargestellten Ausführungsbeispielen beschrieben:

Hierbei zeigt:
- Figur 1a:: eine Seitenansicht einer Abrollvorrichtung,
- Figur 1b:: eine Draufsicht auf die in der Figur 1a dargestellte Abrollvorrichtung,
- Figur 2:: eine zweite Abrollvorrichtung,
- Figur 3: eine dritte Abrollvorrichtung,
- Figur 4:: eine vierte Abrollvorrichtung,
- Figur 5:: eine Draufsicht auf eine große Be- und Entladestation und
- Figur 6:: eine Draufsicht auf ein Gestänge zum seitlichen Ausschwenken von Trägern.

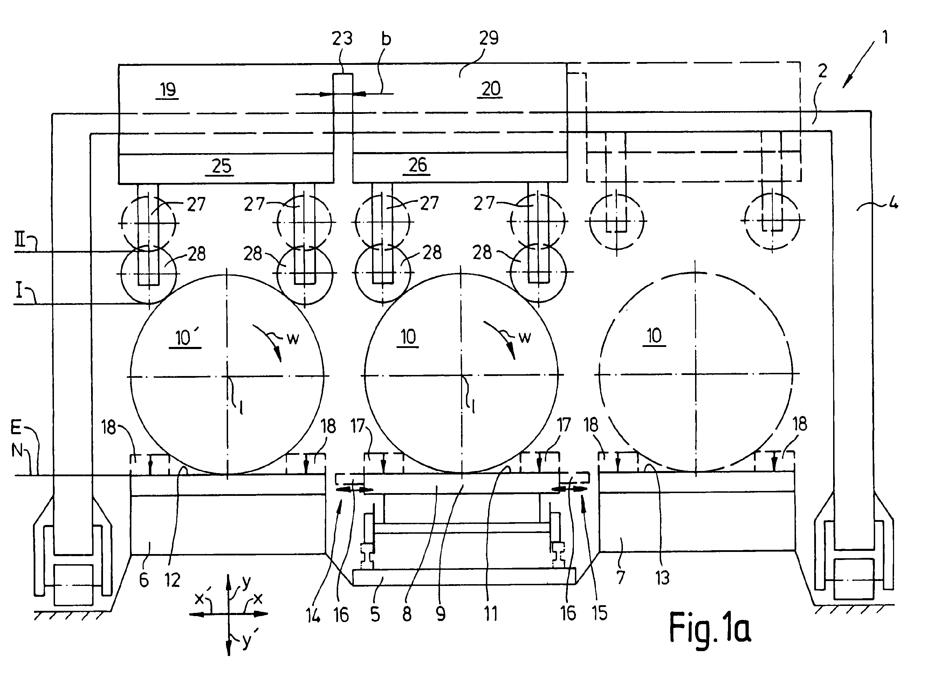

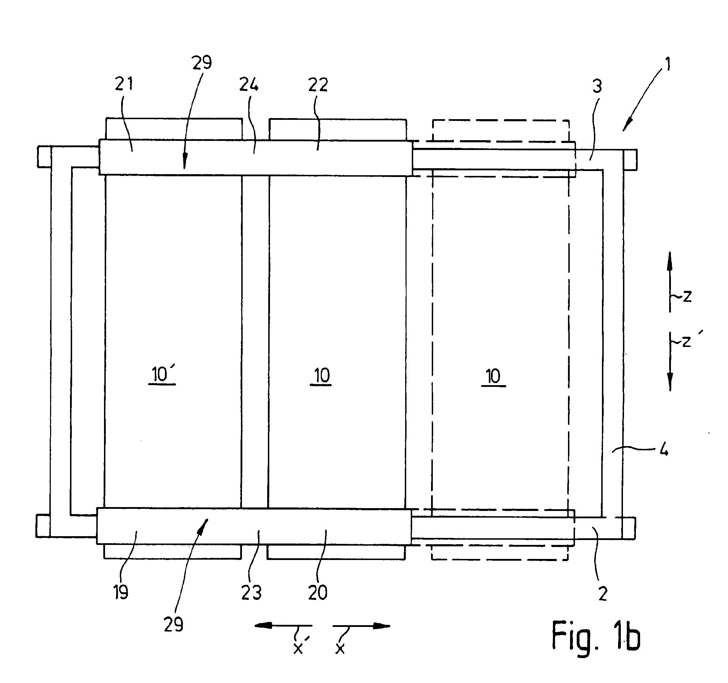

In der Figur 1a ist eine erste erfindungsgemäße Abrollvorrichtung 1 schematisch in Seitensicht dargestellt. Die Abrollvorrichtung weist zwei Brücken 2, 3 auf (siehe auch Figur 1b), welche auf einem Rahmen 4 gelagert sind. Mit den beiden Brücken 2, 3 überspannt die Abrollvorrichtung 1 einen als Gleiskörper 5 ausgebildeten Fahrweg 5, welcher zwischen zwei Lagerplätzen 6, 7 verläuft. Auf dem Gleiskörper 5 parkt ein Güterwaggon 8, welcher im wesentlichen aus einem Fahrgestell 9 und einem darauf angeordneten Transportzylinder 10 besteht. Das Fahrgestell 9 weist eine Lagerfläche 11 auf, welche auf einem gemeinsamen Niveau N mit Lagerflächen 12, 13 der Lagerflächen 6, 7 liegt. Spalte 14, 15 zwischen den Lagerflächen 12 bzw. 13 und der Lagerfläche 11 sind durch Träger 16 überbrückt, welche aus dem Fahrgestell 9 des Güterwaggons 8 ausfahrbar sind und ebenfalls auf dem Niveau N liegen. Die Träger 16 sind bis in nicht dargestellte Rücksprünge der Lagerplätze 6, 7 ausfahrbar und bewirken hierdurch eine Ausrichtung des Güterwaggons 8 zwischen den Lagerplätzen 6, 7 in Pfeilrichtung z bzw. z' (siehe Figur 1b). Auf dem Fahrgestell 9 sind Transportsicherungen 17 angeordnet, welche den Transportzylinder 10 auf dem Fahrgestell 9 sichern. Die Transportsicherungen 17 sind auf das Niveau N der Lagerfläche 11 absenkbar, um eine hindernisfreie waagrechte Rollebene E zu erzeugen. An den Lagerplätzen 6, 7 sind Lagersicherungen 18 angeordnet, welche dazu dienen, die dort liegenden Transportzylinder 10, 10' sicher zu lagern. Auch die Lagersicherungen 18 sind auf das Niveau N absenkbar. Der Rahmen 4 und die Brücken 2, 3 bilden zusammen mit Laufkatzen 19 bis 22 eine Art Brückenkran, welcher in die Pfeilrichtung z bzw. z' entlang dem Gleiskörper 5 verfahrbar ist (siehe auch Figur 1b). Die Laufkatzen 19, 20 bzw. 21, 22 sind auf den Brücken 2 bzw. 3 in Pfeilrichtungen x bzw. x' jeweils gemeinsam verfahrbar. Die Laufkatzen 19, 20 sind über einen Steg 23 und die Laufkatzen 21, 22 über einen Steg 24 miteinander mechanisch gekoppelt und fahren somit mit gleichbleibendem Abstand auf den Brücken 2 bzw. 3 hin und her. (Im Folgenden wird zur Vereinfachung nur noch die Brücke 2 mit ihren zugehörigen Bauteilen beschrieben, die Brücke 3 ist analog ausgestattet.) An den Laufkatzen 19 ,20 ist jeweils eine Antriebseinheit 25, 26 angeordnet, welche an zwei Kolben 27 jeweils eine Rolle 28 trägt. Die Rollen 28 sind aus einer unteren Stellung I in eine obere Stellung II verfahrbar. Oberhalb des Gleiskörpers 5 und des Lagerplatzes 6 ist die Stellung II jeweils mit gestrichelten Linien angedeutet. In der unteren Stellung II der Kolben 27 stehen die Rollen 28 mit den Transportzylindern 10 und 10' in Kontakt. Das heißt, eine Bewegung der Laufkatzen 19, 20 in die Pfeilrichtung x wird über die Antriebseinheiten 25, 26 direkt auf die Transportzylinder 10, 10' übertagen. Bei einem solchen Be- und Entladevorgang sind die betroffenen Transportsicherungen 17 bzw. Lagersicherungen 18 eingefahren, so dass der Transportbehälter 10 vom Fahrgestell 9 auf den Lagerplatz 7 und der Transportbehälter 10' vom Lagerplatz 6 auf das Fahrgestell 9 rollbar ist. Hierbei drehen sich die Transportzylinder 10, 10' um ihre Längsachsen 1 jeweils in eine Rollrichtung w. Der Transportzylinder 10 ist in seiner neuen Position auf dem Lagerplatz 7 mit gestrichelten Linien dargestellt. Über dem Lagerplatz 7 ist die Antriebseinheit 26 mit gestrichelten Linien ebenfalls in ihrer neuen Position dargestellt, welche diese nach dem eben beschriebenen Be- und Entladevorgang erreicht. Der Transportzylinder 10' liegt nach dem beschriebenen Umladevorgang auf dem Fahrgestell 5. In der gestrichelten Darstellung sind die Kolben 27 mit den Rollen 28 bereits in die angehobene Stellung II zurückgezogen, in welcher die aus den Laufkatzen 19, 20 und den Antriebseinheiten 25, 26 gebildete Umladeeinheit 29 über den Transportzylindern 10, 10' frei verfahrbar ist. Analog zu dem beschriebenen Be- und Entladevorgang kann ein solcher auch erfolgen, wenn auf dem Fahrgestell 9 und dem Lagerplatz 7 jeweils ein Transportzylinder ruht. In diesem Fall bewegt sich die Umladeeinheit 29 in die Pfeilrichtung x'. Pro Brücke 2 bzw. 3 weist die Abrollvorrichtung 1 je eine Umladeeinheit 29 auf.

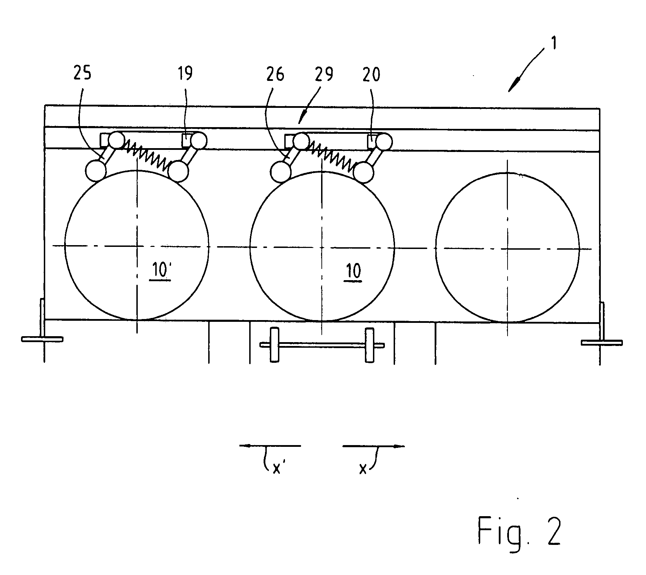

In der Figur 2 ist eine zweite erfindungsgemäße Abrollvorrichtung 1 schematisch in Seitensicht dargestellt. Die Laufkatzen 19, 20 tragen jeweils eine Antriebseinheit 25, 26, die in einer Schwenkbewegung an die Transportzylinder 10, 10' hin bzw. von den Transportzylindern 10, 10' weg geführt wird. Die Laufkatzen und die Antriebseinheiten sind steuerungstechnisch miteinander gekoppelt, bilden zusammen eine Umladeeinheit 29 und lassen sich gemeinsam mit gleichbleibendem Anstand in x bzw. x'-Richtung verfahren.

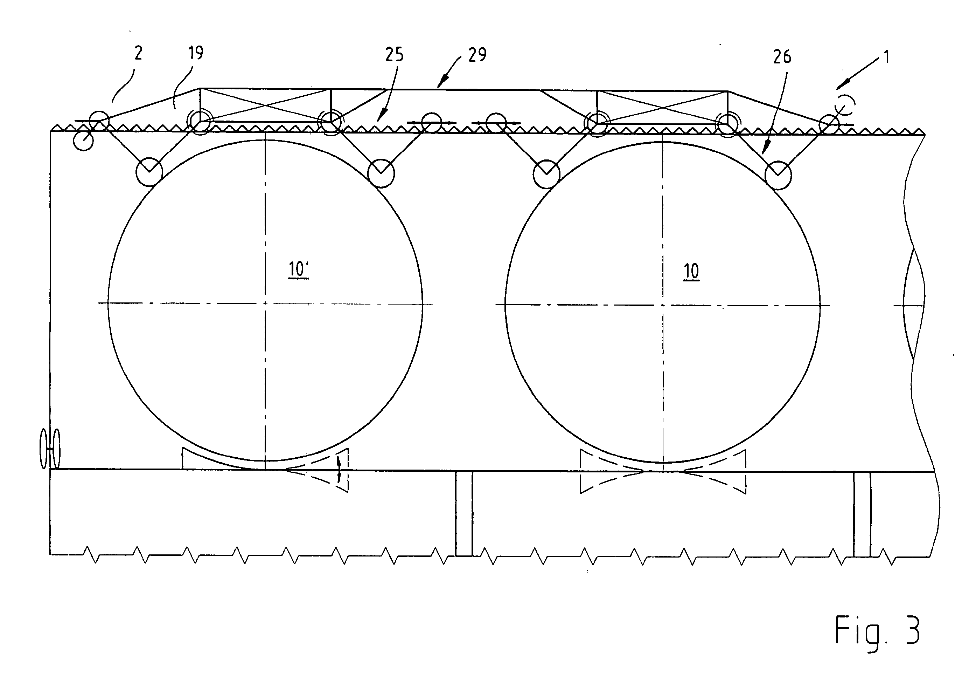

In der Figur 3 ist eine dritte erfindungsgemäße Abrollvorrichtung 1 schematisch in Seitensicht dargestellt. Diese weist an einer Brücke 2 eine Umladeeinheit 29, welche von einer Laufkatze 19 mit zwei Antriebseinheiten 25, 26 gebildet ist.

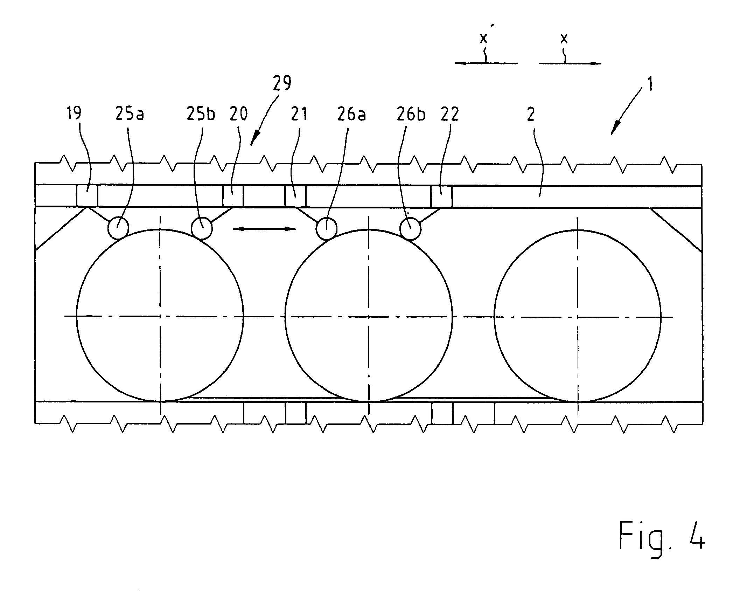

In der Figur 4 ist eine vierte erfindungsgemäße Abrollvorrichtung 1 schematisch in Seitensicht dargestellt. Diese weist an einer Brücke 2 vier Laufkatzen 19 bis 22 auf, wobei jede Laufkatze 19 bis 22 eine Teilantriebseinheit 25a, 25b, 26a, 26b trägt. Die Laufkatzen 19 bis 22 und die Teilantriebseinheiten 25a, 25b, 26a, 26b bilden zusammen eine Umladeeinheit 29 und sind steuerungstechnisch miteinander gekoppelt und lassen sich hierdurch gemeinsam mit gleichbleibendem Anstand in x bzw. x'-Richtung verfahren.

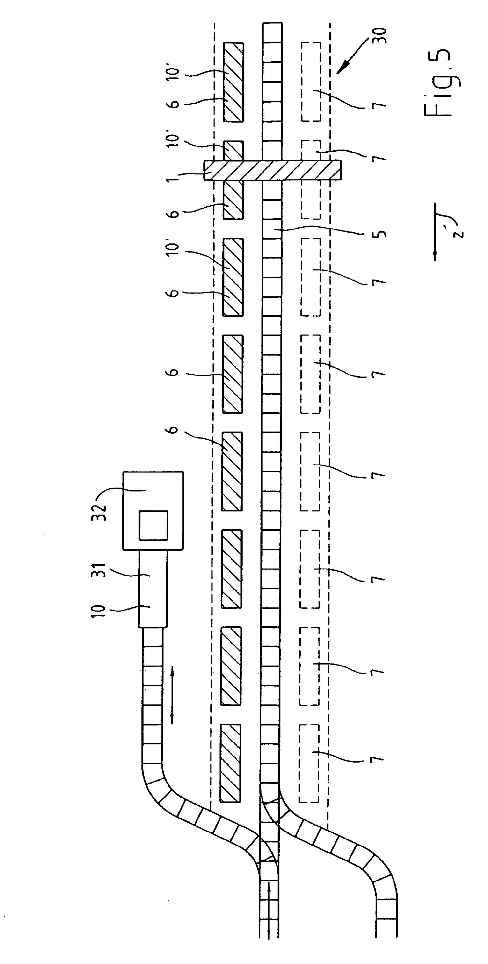

In der Figur 5 ist eine Draufsicht auf eine große Be- und Entladestation 30 mit einer Abrollvorrichtung 1 dargestellt. Diese weist links und rechts eines Gleiskörpers 5 jeweils acht Lagerplätze 6 bzw. 7 auf. Die Be- und Entladestation 30 ermöglicht es, einen nicht dargestellten Güterzug mit acht Waggons, welche Transportzylinder tragen, in kürzester Zeit zu Be- und Entladen. Hierzu wird der Güterzug zwischen die Lagerplätze 6, 7 geparkt und die Abrollvorrichtung 1 fährt beispielsweise in eine Pfeilrichtung z' von Waggon zu Waggon über diesen hinweg und rollt hierbei die entleerten Transportzylinder 10' von den Lagerplätzen 6 auf die nicht dargestellten Fahrgestelle des Güterzugs, von welchen gleichzeitig nicht dargestellte volle Transportzylinder auf die Lagerplätze 7 gerollt werden. Danach kann der Güterzug die Be- und Entladestation wieder verlassen und ist vollständig mit entleerten Transportzylindern bestückt. Ein Entleeren der angelieferten Transportzylinder erfolgt beispielsweise mittels eines weiteren Fahrgestells 31, welches die vollen Transportzylinder zwischen der Be- und Entladestation und einer Entleereinrichtung 32 hin und her fährt. Sofern ein überzähliger Transportzylinder 10 vorhanden ist, ist es möglich auch hierbei ständig ein gleichzeitiges Be- und Entladen durchzuführen, wobei nach der Abarbeitung aller angelieferten Transportzylinder diese für den nächsten Güterzug entleert auf den Lagerplätzen 6 bereitstehen.

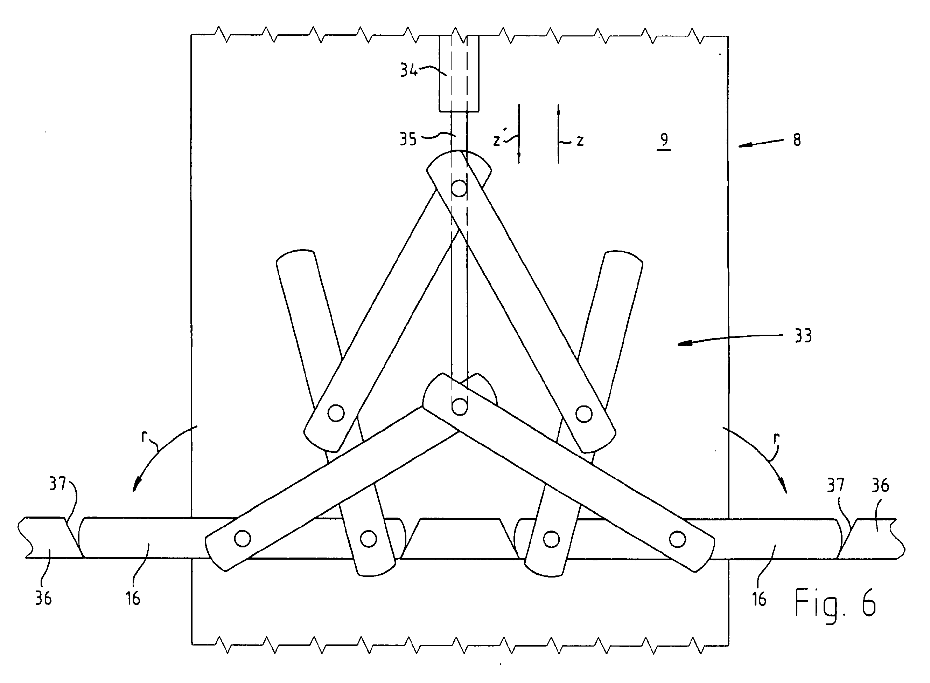

In der Figur 6 ist eine Draufsicht auf ein schematisch dargestelltes Gestänge 33 zum seitlichen Ausschwenken von Trägern 16 abgebildet. Das Gestänge 33 ist durch einen hydraulisch oder pneumatisch betriebenen Zylinder 34 angetrieben und auf einem Fahrgestell 9 angeordnet. Durch ein Verfahren einer Kolbenstange 35 in eine Pfeilrichtung z' erfolgt ein Ausschwenken der Träger 16 in Pfeilrichtungen v über die seitlichen Abmessungen des Fahrgestells hinaus. Die Träger 16 werden auf Gegenträger 36 zugeschwenkt, welche Anlaufschrägen 37 aufweisen und an nicht dargestellten Lagerplätzen angeordnet sind. Durch die Verwendung eines zweiten spiegelbildlich an dem Fahrgestell angeordneten Gestänges mit entsprechend spiegelbildlich angeordneten Gegenlagern lässt sich das Fahrgestell in z bzw. z'-Richtung zwischen den nicht dargestellten Lagerplätzen ausrichten. Durch ein Zurückfahren der Kolbenstange 35 in die Pfeilrichtung z erfolgt ein Einschwenken der Träger 16 auf das Fahrgestell. Die in der Figur 6 dargestellte Ausführungsvariante kommt entsprechend der Figur 1a zum Einsatz.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung vor, die Brücke, an welcher die Umladeeinheit verfahrbahr ist als frei tragenden Arm auszubilden.

### Bezugszeichenliste:

- 1: Abrollvorrichtung
- 2, 3: Brücke
- 4: Rahmen
- 5: Fahrweg /Gleiskörper
- 6, 7: linker bzw. rechter Lagerplatz
- 8: Güterwaggon
- 9: Fahrgestell
- 10, 10': Transportzylinder
- 11: Lagerfläche von 9
- 12, 13: Lagerfläche von 6 bzw. 7
- 14, 15: Spalt zwischen 11, 12 bzw. 11, 13
- 16: Träger an 9
- 17: Transportsicherung
- 18: Lagersicherung
- 19 - 22: Laufkatze
- 23, 24: Steg zwischen 19, 20 bzw. 21, 22
- 25, 26: Antriebseinheit
- 25a, 25b: Teilantriebseinheit
- 26a, 26b: Teilantriebseinheit
- 27: Kolben von 25 bzw. 26
- 28: Rolle an 25 bzw. 26
- 29: Umladeeinheit
- 30: Be- und Entladestation
- 31: Fahrgestell
- 32: Entleereinrichtung
- 33: Gestänge
- 34: Zylinder
- 35: Kolbenstange
- 36: Gegenlager
- 37: Anlaufschräge

- 1: Längsachse von 10 bzw. 10'
- b: Abstand zwischen 19 und 20
- I, II: untere bzw. obere Stellung von 25 bzw. 26

- N: Niveau von 11 bzw. 12 bzw. 13
- w: Drehrichtung von 10 bzw. 10'
- v: Schwenkrichtung von 16

## Patentansprüche

1. Abrollvorrichtung (1) zum Rollen eines Transportzylinders (10, 10') um dessen Längsachse (1), welche wenigstens eine Brücke (2, 3) mit wenigstens einer horizontal verfahrbaren Laufkatze (19 - 22) umfasst, an welcher eine Antriebseinheit (25, 26) angeordnet ist, die vertikal verfahrbar ist und in einer abgesenkten Stellung (I) auf den Transportzylinder (10, 10') einwirkt, **dadurch gekennzeichnet, dass** die Abrollvorrichtung (1) an der Brücke (2, 3) wenigstens zwei Antriebseinheiten (25, 26) aufweist, welche zeitgleich auf zwei benachbarte Behälter (10; 10') einwirken und diese parallel zueinander um deren Längsachsen (1) rollen.

2. Abrollvorrichtung nach Anspruch 1, **dadurch gekennzeichnet, dass** die Abrollvorrichtung (1) an einer Brücke (2, 3) wenigstens zwei Laufkatzen (19, 20; 21, 22) mit jeweils einer Antriebseinheit (25, 26) aufweist.

3. Abrollvorrichtung nach einem der vorhergehenden Ansprüche, **dadurch gekennzeichnet, dass** die Abrollvorrichtung (1) an einer Brücke (2, 3) wenigstens eine Laufkatze (19 - 22) mit zwei Antriebseinheiten (25, 26) aufweist.

4. Abrollvorrichtung nach einem der vorhergehenden Ansprüche, **dadurch gekennzeichnet, dass** die Abrollvorrichtung (1) an einer Brücke (2, 3) wenigstens vier Laufkatzen (19 - 22) mit jeweils einer Teilantriebseinheit (25a, 25b, 26a, 26b) aufweist.

5. Abrollvorrichtung nach einem der vorhergehenden Ansprüche, **dadurch gekennzeichnet, dass** die Laufkatzen (19, 20; 21, 22) mechanisch miteinander verbindbar sind.

6. Abrollvorrichtung nach einem der vorhergehenden Ansprüche, **dadurch gekennzeichnet, dass** die Laufkatzen (19, 20; 21, 22) bezüglich ihrer horizontalen Bewegung regelungstechnisch oder steuerungstechnisch miteinander koppelbar sind.

7. Abrollvorrichtung nach einem der vorhergehenden Ansprüche, **dadurch gekennzeichnet, dass** die Abrollvorrichtung (1) wenigstens zwei parallel zueinander angeordnete Brücken (2, 3) aufweist.

8. Abrollvorrichtung nach einem der vorhergehenden Ansprüche, **dadurch gekennzeichnet, dass** die Abrollvorrichtung (1) in Längsrichtung (z, z') des Transportzylinders (10, 10') verfahrbar ist.

9. Abrollvorrichtung nach einem der vorhergehenden Ansprüche, **dadurch gekennzeichnet, dass** die Abrollvorrichtung (1) wenigstens einen Fahrweg (5) insbesondere einen Gleiskörper (5) und jeweils wenigstens einen links und rechts neben dem Fahrweg (5) angeordneten Lagerplatz (6, 7) überspannt.

10. Abrollvorrichtung nach einem der vorhergehenden Ansprüche, **dadurch gekennzeichnet, dass** die Antriebseinheit (25, 26) mittels wenigstens zwei Rollen (28) auf den Transportzylinder (10, 10') einwirkt.

11. Abrollvorrichtung nach einem der vorhergehenden Ansprüche, **dadurch gekennzeichnet, dass** wenigstens eine der Rollen (28) einen Drehantrieb aufweist und der Transportzylinder (10, 10') durch diese reibschlüssig und/oder formschlüssig antreibbar ist.

12. Güterwaggon (8) mit einer Abrollvorrichtung nach einem der vorhergehenden Ansprüche, **dadurch gekennzeichnet, dass** auf einem Fahrgestell (9) des Güterwaggons (8) unterhalb einer Lagerfläche (11) für einen Transportzylinder (10, 10') ein Gestänge (33) zum seitlichen Ausschwenken von Trägern (16) angeordnet ist, welche zwischen dem Güterwaggon (8) und dem Lagerplatz (6, 7) eine waagrechte Lauffläche für einen rollenden Transportzylinder (10, 10') bilden.

## Claims

1. Roll-off device (1) for rolling a transporting cylinder (10, 10') around its longitudinal axis, which comprises at least one bridge (2, 3) with at least one horizontally travelling trolley (19, 22), on which a drive unit (25, 26) is arranged, which can be driven vertically and in a lowered position (I) acts on the transport cylinder (10, 10'), **characterised in that** the roll-off device (1) has at least two drive units (25, 26) on the bridge (2, 3) which act simultaneously upon two adjacent containers (10; 10') and roll the latter parallel to one another about their longitudinal axes (1).

2. Roll-off device according to claim 1, **characterised in that** the roll-off device (1) has at least two trolleys (19, 20; 21, 22) on one bridge (2, 3), each comprising a drive unit (25, 26).

3. Roll-off device according to one of the preceding claims, **characterised in that** the roll-off device (1) on a bridge (2, 3) has at least one trolley (19-22) with two drive units (25, 26).

4. Roll-off device according to one of the preceding claims, **characterised in that** the roll-off device (1) on a bridge (2, 3) has at least four trolleys (19-22) each with a partial drive unit (25a, 25b, 26a, 26b).

5. Roll-off device according to one of the preceding claims, **characterised in that** the trolleys (19, 20; 21, 22) can be connected together mechanically.

6. Roll-off device according to one of the preceding claims, **characterised in that** the trolleys (19, 20; 21, 22) can be coupled together with regard to their horizontal movement by means of control engineering or control technology.

7. Roll-off device according to one of the preceding claims, **characterised in that** the roll-off device (1) comprises at least two bridges (2, 3) arranged in parallel.

8. Roll-off device according to one of the preceding claims, **characterised in that** the roll-off device (1) can travel in longitudinal direction (z, z') of the transport cylinder (10, 10').

9. Roll-off device according to one of the preceding claims, **characterised in that** the roll-off device (1) spans at least one travelling route (5), in particular a sliding member (5) and at least one bearing point (6, 7) arranged left and right adjacent to the travelling route (5).

10. Roll-off device according to one of the preceding claims, **characterised in that** the drive unit (25, 26) acts by means of at least two rollers (28) on the transport cylinder (10, 10').

11. Roll-off device according to one of the preceding claims, **characterised in that** at least one of the rollers (28) comprises a rotary drive and the transport cylinder (10, 10') can be driven by the latter frictionally and/or by positive engagement.

12. Goods wagon (8) with a roll-off device according to one of the preceding claims, **characterised in that** on an underframe (9) of the goods wagon (8) underneath a bearing surface (11) for a transport cylinder (10, 10') a connecting rod (33) is arranged for the lateral swivelling out of carriers (16), which between the goods wagon (8) and the bearing point (6, 7) form a horizontal running surface for a rolling transport cylinder (10, 10').

## Revendications

1. Dispositif de déplacement (1) pour faire rouler un cylindre de transport (10, 10') sur son axe longitudinal (1), comportant au moins un pont (2, 3) avec au moins un chariot (19 à 22) mobile horizontalement et sur lequel est disposée une unité de travail (25, 26) mobile verticalement qui agit sur le cylindre de transport (10, 10') dans une position abaissée (I),
**caractérisé en ce que**
le dispositif de déplacement (1) présente, sur le pont (2, 3), au moins deux unités d'entraînement (25, 26) qui agissent simultanément sur deux cylindres conteneurs adjacents (10 ; 10') et font rouler ceux-ci parallèlement l'un par rapport à l'autre sur leurs axes longitudinaux (1).

2. Dispositif de déplacement selon la revendication 1,
**caractérisé en ce que**
le dispositif de déplacement (1) présente, sur un pont (2, 3), au moins deux chariots (19, 20 ; 21, 22) équipé chaque fois d'une unité d'entraînement (25, 26).

3. Dispositif de déplacement selon l'une des revendications précédentes,
**caractérisé en ce que**
le dispositif de déplacement (1) présente, sur un pont (2, 3), au moins un chariot (19 à 22) équipé de deux unités d'entraînement (25, 26).

4. Dispositif de déplacement selon l'une des revendications précédentes,
**caractérisé en ce que**
le dispositif de déplacement (1) présente, sur un pont (2, 3), au moins quatre chariots (19 à 22) équipés chaque fois d'une unité d'entraînement partiel (25a, 25b, 26a, 26b).

5. Dispositif de déplacement selon l'une des revendications précédentes,
**caractérisé en ce que**
les chariots (19, 20 ; 21, 22) sont reliés entre eux mécaniquement.

6. Dispositif de déplacement selon l'une des revendications précédentes,
**caractérisé en ce que**
les chariots (19, 20 ; 21, 22) peuvent être couplés entre eux dans leur mouvement horizontal par une régulation ou par une commande.

7. Dispositif de déplacement selon l'une des revendications précédentes,
**caractérisé en ce que**
le dispositif de déplacement (1) présente au moins deux ponts (2, 3) parallèles entre eux.

8. Dispositif de déplacement selon l'une des revendications précédentes,
**caractérisé en ce que**
le dispositif de déplacement (1) peut se déplacer dans le sens de la longueur (z, z') du cylindre de transport (10, 10').

9. Dispositif de déplacement selon l'une des revendications précédentes,
**caractérisé en ce que**
le dispositif de déplacement (1) enjambe au moins une voie (5), en particulier un corps de voie (5), et chaque fois au moins un emplacement de dépôt (6, 7) disposé à droite et à gauche de la voie (5).

10. Dispositif de déplacement selon l'une des revendications précédentes,
**caractérisé en ce que**
l'unité d'entraînement (25, 26) agit sur le cylindre de transport (10, 10') à l'aide d'au moins deux rouleaux (28).

11. Dispositif de déplacement selon l'une des revendications précédentes,
**caractérisé en ce qu'**
au moins un des rouleaux (28) présente un entraînement en rotation qui entraîne le cylindre de transport (10, 10') par complémentarité de force et/ou de forme.

12. Wagon de marchandises (8) comportant un dispositif de déplacement selon l'une des revendications précédentes,
**caractérisé en ce qu'**
un cadre (33) est disposé sur un châssis (9) d'un wagon de marchandises (8), en dessous d'une surface de logement (11) prévue pour un cylindre de transport (10, 10'), pour faire pivoter latéralement des supports (16) qui forment une bande de roulement horizontale pour un cylindre de transport (10, 10') roulant entre le wagon de marchandises (8) et l'emplacement de dépôt (6, 7).
